# EUROPÄISCHE PATENTANMELDUNG

(11) **EP 0 917 393 A2**
(43) Veröffentlichungstag der Anmeldung: **19.05.1999**
(21) Anmeldenummer: 98440231.3
(22) Anmeldetag: 23.10.1998
(51) Int. Cl.: H04Q 11/04

(54) **Verfahren zum Einrichten einer digitalen Nachrichtenverbindung, Teilnehmerendgerät und Vermittlungsstelle**

(30) Priorität: 11.11.1997 DE 19749770
(71) Anmelder: ALCATEL, 75008 Paris (FR)
(72) Erfinder: Kopp, Dieter, 71282 Hemmingen (DE); Sienel, Jürgen, 71229 Leonberg (DE)
(74) Vertreter: Schätzle, Albin, Dipl.-Phys.

(57) **Zusammenfassung**

Ein Verfahren zum Einrichten einer digitalen Nachrichtenverbindung zwischen einem rufenden und mindestens einem gerufenen Teilnehmerendgerät, die besser an die von einem Teilnehmer genutzte Übertragungsbandbreite angepaßt ist, hat folgende Schritte: Erste wird einer vorläufige Verbindung mit einer Standardübertragungsrate von dem rufenden zu dem gerufenen Teilnehmerendgerät bei einer Vermittlungsstelle angefordert. Dann wird diese vorläufige Verbindung von der Vermittlungsstelle eingerichtet. Als nächstes wird von dem rufenden Teilnehmerendgerät ein neuer, niedrigerer Wert für die Übertragungsrate ausgewählt. Dieser neue Wert wird dann mit der Vermittlungsstelle vereinbart. Diese schaltet schließlich die Übertragungsrate der vorläufigen Verbindung auf den neuen, niedrigeren Wert um, wodurch das Einrichten der Nachrichtenverbindung abgeschlossen ist.

Die Erfindung kann in einem digitalen Telekommunikationsnetz, das beispielsweise nach dem ISDN-Standard arbeitet, vorteilhaft eingesetzt werden, um Übertragungskapazität zu sparen und Gesprächsgebühren zu reduzieren.

## Beschreibung

Die Erfindung betrifft ein Verfahren zum Einrichten einer digitalen Nachrichtenverbindung, insbesondere einer digitalen Sprachverbindung, zwischen mindestens zwei Teilnehmerendgeräten. Weiter betrifft die Erfindung ein Teilnehmerendgerät und eine Vermittlungsstelle zum Einrichten der digitalen Nachrichtenverbindung.

Für digitale Telefonverbindungen werden nach dem Standard für ISDN Nachrichtenverbindungen mit einer Standardübertragungsrate von 64 kbit/s pro B-Kanal zwischen zwei Teilnehmerendgeräten aufgebaut. Dies ist z.B. in dem Artikel "Digitales Vermittlungssystem EWSD" von K. Langner beschrieben (Telekom Unterrichtsblätter, Jg.46 2/1993). Ein rufendes Teilnehmerendgerät handelt über einen Steuerkanal (D-Kanal) die Verbindungsanforderung mit einer Vermittlungsstelle ab, die die Nachrichtenverbindung dann aufbaut.

Gemäß der Empfehlung 1.460 der ITU-T (Facsimile III.8-Rec, 1.460, 1993) ist es in ISDN möglich, andere niedrigere Übertragungsraten als 64 kbit/s zu verwenden und diese dann an die Übertragungsrate eines B-Kanales von 64 kbit/s anzupassen, beispielsweise 8, 16 oder 32 kbit/s. Weiter besteht die Möglichkeit, mehrere Datensignale mit einer niedrigeren Übertragungsrate in einen 64 kbit/s B-Kanal zu multiplexen.

Der Erfindung liegt die Aufgabe zugrunde, ein Verfahren anzugeben, nach dem in einem digitalen Telekommunikationsnetz zwischen mindestens zwei Teilnehmerendgeräten eine Nachrichtenverbindung eingerichtet werden kann, die besser an die von einem Teilnehmer genutzte Übertragungsbandbreite angepaßt ist. Weitere Aufgaben der Erfindung bestehen darin, ein Teilnehmerendgerät und eine Vermittlungsstelle anzugeben, die zur Ausführung des Verfahrens geeignet sind.

Die Aufgabe wird hinsichtlich des Verfahrens gelöst durch die Merkmale des Anspruchs 1, hinsichtlich des Teilnehmerendgerätes durch die Merkmale des Anspruchs 10 und hinsichtlich der Vermittlungsstelle durch die Merkmale des Anspruchs 11. Vorteilhafte Weiterbildungen sind den abhängigen Ansprüchen zu entnehmen.

Ein Vorteil der Erfindung liegt darin, daß die vorhandene Übertragungskapazität eines Telekommunikationsnetzes effektiver genutzt werden kann und daß für eine Nachrichtenverbindung nur soviel Übertragungskapazität zur Verfügung gestellt werden braucht wie auch tatsächlich benötigt wird. Ein weiterer Vorteil ist, daß in dem Fall, daß eine Vergebührung von der über die eingerichtete Nachrichtenverbindung maximal übertragbaren Nutzlast abhängt, für den Endteilnehmer eine Kostenersparnis bei den Gesprächsgebühren auftritt.

Im folgenden wird die Erfindung anhand der einzigen Figur in einem Ausführungsbeispiel erläutert. Die Figur zeigt ein Ablaufdiagramm mit den einzelnen Schritten des Verfahrens.

Der Erfindung liegt die Erkenntnis zugrunde daß für einige Anwendungen, insbesondere für Sprachübertragung unter Verwendung moderner Sprachkodierer (Codec), die maximale Übertragungsrate einer Nachrichtenverbindung von beispielsweise 64 kbit/s bei ISDN nicht voll benötigt wird. Sind zwei über eine Nachrichtenverbindung verbundene Teilnehmerendgeräte beide in der Lage, einen zuvor festgelegten Sprachkodierer zu verwenden, so kann die Übertragungsrate verringert werden. Dadurch läßt sich in einem Telekommunikationsnetz Übertragungskapazität einsparen.

Ein Grundgedanke der Erfindung besteht darin, zunächst eine vorläufige Nachrichtenverbindung mit einer festgelegten Standardübertragungsrate (z.B. 64 kbit/s) aufzubauen, anschließend einen neuen Wert für die Übertragungsrate auszuwählen, diesen neuen Wert mit einer Vermittlungsstelle zu vereinbaren und dann die Übertragungsrate der vorläufigen Nachrichtenverbindung auf den neuen Wert umzuschalten.

Bei der Auswahl der des neuen Wertes können verschiedene Kriterien eine Rolle spielen: Es kann geprüft werden, welche Übertragungsraten von dem gerufenen Teilnehmerendgerät unterstützt werden, welchen Sprachkodierer rufendes und gerufenes Teilnehmerendgerät einsetzen können, wie hoch die benötigte Übertragungsrate ist und mit welcher Qualität eine Nachrichtenübertragung stattfinden soll.

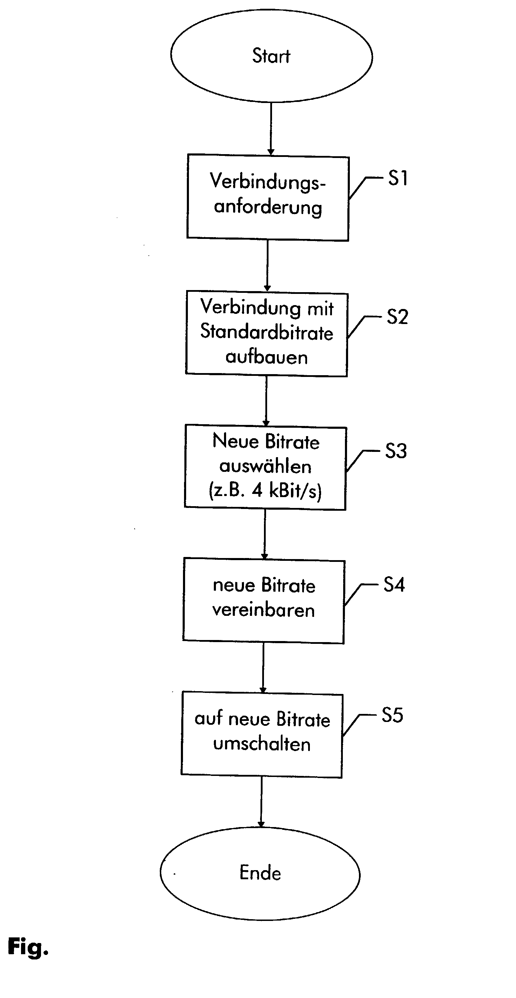

In dem Ausführungsbeispiel werden nacheinander folgende im Ablaufdiagramm der Figur 1 gezeigten Schritte ausgeführt:
S1: Das rufende Teilnehmerendgerät fordert bei der Vermittlungsstelle, an die es angeschlossen ist, eine Nachrichtenverbindung mit der Standardübertragungsrate von 64 kbit/s zu einem gerufenen Teilnehmerendgerät an. Die angeforderte Nachrichtenverbindung soll eine vorläufige Verbindung sein. Bei den Teilnehmerendgeräten handelt es sich um ISDN-Telefone; die Nachrichtenverbindung soll als Gesprächsverbindung genutzt werden.
S2: Der Verbindungswunsch wird von der Vermittlungsstelle ausgeführt, indem die Nachrichtenverbindung zu dem gerufenen Teilnehmerendgerät als vorläufige Verbindung eingerichtet wird. Bei der Vermittlungsstelle handelt es sich hier um eine Ortsvermittlungsstelle. Die Nachrichtenverbindung kann je nach Standort des gerufenen Teilnehmerendgerätes über weitere Vermittlungsstellen, beispielsweise eine Fernvermittlungsstelle und die Ortsvermittlungsstelle, an die das gerufene Teilnehmerendgerät angeschlossen ist, verlaufen.
S3: Das rufende Teilnehmerendgerät wählt nun einen neuen Wert für die Übertragungsrate aus. Die Auswahl erfolgt aus einer Reihe möglicher vorgegebener Werte. Hierzu fragt das rufende Teilnehmerendgerät von dem gerufenen Teilnehmerendgerät eine Liste möglicher Werte ab. Weiter fragt das rufende Teilnehmerendgerät bei dem gerufenen ab, welcher Sprachkodierer eingesetzt werden kann. Ausgewählt wird nun der niedrigste Wert mit dem der Sprachkodierer arbeiten kann. Im Ausführungsbeispiel ist dies 4 kbit/s.
S4: Zwischen der Vermittlungsstelle und dem rufenden Teilnehmerendgerät wird nun der ausgewählte Wert als neuer Wert für die Übertragungsrate der Nachrichtenverbindung vereinbart. Diese Vereinbarung kann über das D-Kanalprotokoll des Steuerkanals erfolgen.
S5: Die Vermittlungsstelle schaltet daraufhin die Übertragungsrate der vorläufigen Verbindung auf den vereinbarten niedrigeren Wert um. Das Einrichten der Nachrichtenverbindung ist damit abgeschlossen.

Von dem Zeitpunkt des Umschaltens an, wird sowohl in dem rufenden als auch in dem gerufenen Teilnehmerendgerät ein Sprachkodierer verwendet, der zu sendende Sprachsignale komprimiert und empfangene Sprachsignale dekomprimiert. Zwischen Teilnehmerendgerät und Vermittlungsstelle kann vor und nach Umschalten stets dasselbe Protokoll mit derselben Bitfolgefrequenz verwendet werden (Standardübertragungsrate). Die neue Übertragungsrate kann zwischen Teilnehmerendgerät und Vermittlungsstelle an die Standardübertragungsrate angepaßt werden, wie ITU-T 1.460 dies vorsieht. Zwischen den Ortsvermittlungsstellen, an die rufendes und gerufenes Teilnehmerendgerät jeweils angeschlossen sind, findet jedoch eine Übertragung mit reduzierter Übertragungsrate statt.

In der Vermittlungsstelle, an die der rufende Teilnehmer angeschlossen ist, können vorteilhaft mehrere Signale von Nachrichtenverbindungen mit niedriger Übertragungsrate anderer Teilnehmer zu einem einzigen Signal mit Standardübertragungsrate gemultiplext werden, wie dies in ITU-T 1.460 vorgesehen ist. Beispielsweise 16 Nachrichtenverbindungen mit je 4 kbit/s oder 4 x 8 kbit/s und 8 x 4kbit/s oder auch andere Kombinationen möglicher niedrigerer Übertragungsraten (32 kbit/s, 16 kbit/s, 8kbit/s, 4kbit/s). Das gemultiplexte Signal mit Standardübertragungsrate kann dann über einen einzigen Kanal zu einer anderen Vermittlungsstelle, beispielsweise der Fernvermittlungsstelle übertragen werden. Dadurch wird Leitungskapazität indem Telekommunikationsnetz eingespart. Besonders vorteilhaft ist es hierbei, wenn die möglichen niedrigeren Werte für die Übertragungsrate ein ganzzahliger Teiler der Standardübertragungsrate sind (beispielsweise 2, 4, 8 oder 16 von 64).

Neben Telefongesprächen kann die Nachrichtenverbindung auch für Datenübertragung, Fax oder ähnliches verwendet werden. Die Übertragungsrate wird in diesem Fall an die für die jeweilige Funktion notwendige Übertragungsrate angepaßt. So kann ein Fax je nach Typ von sendendem und empfangendem Faxgerät z.B. mit 9,6 kbit/s übertragen werden. Für Datenübertragung wird die Übertragungsrate nach der Menge zu übertragender Daten bestimmt, bei Online-Diensten kann z.B. 2,4 kbit/s ausreichen.

Von dem Betreiber des Telekommunikationsnetz wird vorteilhafterweise eine niedrigere Gesprächsgebühr für Nachrichtenverbindungen mit reduzierter Übertragungsrate berechnet wie für solche mit Standardübertragungsrate.

Vor dem Umschalten der Übertragungsrate ist es vorteilhaft, wenn der neue Wert auch zwischen dem gerufenen und dem rufenden Teilnehmerendgerät vereinbart wird, damit es nicht zu einer Störung der Verbindung kommt. Diese Vereinbarung kann bei ISDN über den Übertragungskanal (B-Kanal) erfolgen, da der Steuerkanal nicht transparent von einem Endgerät zum anderen durchgeschaltet wird. Alternativ kann auch von den zwischengeschalteten Vermittlungsstellen der Umschaltvorgang über den Steuerkanal an das gerufene Teilnehmerendgerät signalisiert werden. Eine andere Möglichkeit ist, daß in dem gerufenen Teilnehmerendgerät eine Vorrichtung integriert ist, die ein Umschalten automatisch detektiert, indem die neue Übertragungsrate erkannt wird.

Bei der Nachrichtenverbindung kann es sich auch um eine Konferenzschaltung zwischen einem rufenden Teilnehmerendgerät zu mehreren gerufenen Teilnehmerendgeräten handeln, oder auch um eine weitergeleitete Verbindung, die durch eine Anrufweiterschaltung entsteht. Im letzten Fall kann auch nur eine Teilstrecke der Nachrichtenverbindung mit reduzierter Übertragungsrate betrieben werden, wenn beispielsweise das Teilnehmerendgerät, auf das der Anruf weitergeschaltet wurde nicht über einen Sprachkodierer verfügt und daher Gespräche mit reduzierter Übertragungsrate nicht unterstützt. Im ersten Fall (Konferenzschaltung) sollten alle involvierten Teilnehmerendgeräte über einen Sprachkodierer verwenden und Gespräche mit reduzierter Übertragungsrate unterstützen, damit eine Kommunikation unter allen Geräten möglich ist (kleinster gemeinsamer Nenner).

Bei der Vermittlungsstelle kann es sich auch um eine Telekommunikationsanlage (Nebenstellenanlage) handeln. Dies ist z.B. sinnvoll für Firmennetze, die aus über Mietleitungen (leased lines) miteinander verbundenen Teil netzen bestehen.

Bei einer vorteilhaften Weiterbildung des erfindungsgemäßen Verfahrens wird die Übertragungsrate schrittweise reduziert. Die schrittweise Reduktion der Übertragungsrate kann solange durchgeführt werden, wie eine Verbindung mit akzeptabler Gesprächsqualität erreicht wird. Wird die Qualität der Gesprächsverbindung durch zu starke Datenreduktion durch den Sprachkodierer oder durch Übertragungsfehler zu schlecht, so wird auf die letzte akzeptable Übertragungsrate zurückgeschaltet. Weiter wird durch dieses Vorgehen eine automatische Prüfung ermöglicht, welche Übertragungsraten von dem gerufenen Teilnehmerendgerät unterstützt werden.

Es kann sich als vorteilhaft erweisen, während eines Gespräches die Übertragungsrate wieder auf die Standardübertragungsrate zurückzuschalten, wenn beispielsweise die Qualität der Verbindung schlecht ist, d.h. wenn Übertragungsfehler auftreten, durch die eine Verbindung mit reduzierter Übertragungsrate gestört wird.

Ein zur Ausführung des Verfahrens geeignetes Teilnehmerendgerät verfügt über Mittel zum Anfordern einer vorläufigen Verbindung zu einem gerufenen Teilnehmerendgerät bei der angeschlossenen Vermittlungsstelle. In Telekommunikationsnetzen nach dem ISDN-Standard ist dies eine Schnittstelle zu der Vermittlungsstelle über den D-Kanal, über die mittels des D-Kanalprotokolls die Verbindungsanforderung getätigt wird. Weiter verfügt das Teilnehmerendgerät über eine Auswahleinrichtung zum Auswählen eines neuen niedrigeren Wertes für die Übertragungsrate. Die Auswahleinrichtung kann auch prüfen, welcher Wert geeignet ist. Es kann sich bei der Auswahleinrichtung auch um eine von einem Benutzer mittels einer Taste aktivierbare Funktion handeln, beispielsweise ein Umschalter "high bitrate = > low bitrate". Weiter verfügt das Teilnehmerendgerät über Mittel zum Vereinbaren des neuen Wertes mit der Vermittlungsstelle. Dies kann im Falle von ISDN ebenfalls die Schnittstelle zum D-Kanal sein. Vorteilhaft verfügt das Teilnehmerendgerät über einen Sprachkodierer. Die geschilderten Funktionseinheiten können beispielsweise als Teile (Module) eines Softwareprogrammes ausgeführt sein, welches den Betrieb eines digitalen, prozessorgesteuerten Teilnehmerendgerätes steuert.

Eine zur Ausführung des Verfahrens geeignete Vermittlungsstelle besitzt neben den üblichen Mitteln zum Einrichten einer von einem rufenden Teilnehmerendgerät angeforderten Nachrichtenverbindung mit Standardübertragungsrate zu einem gerufenen Teilnehmerendgerät, Mittel zum Vereinbaren des neuen Wertes für die Übertragungsrate mit dem rufenden Teilnehmerendgerät und Mittel zum Umschalten der Übertragungsrate der eingerichteten Nachrichtenverbindung auf den neuen, niedrigeren Wert. Vorteilhaft besitzt die Vermittlungsstelle auch Mittel zum Multiplexen von mehreren Nachrichtensignalen mit niedrigerer Übertragungsrate zu einem Signal mit Standardübertragungsrate. Die geschilderten Funktionseinheiten können als Teile (Module) eines Softwareprogramms, welches den Betrieb einer digitalen Vermittlungsstelle steuert, ausgeführt sein.

Bei einer vorteilhaften Weiterbildung der erfindungsgemäßen Vermittlungsstelle besitzt diese zusätzlich Mittel zum Umwandeln der über die Verbindung zu dem rufenden Teilnehmerendgerät empfangenen Signale mit niedrigerer Übertragungsrate in Signale mit Standardübertragungsrate. Dadurch wird ermöglicht, daß auch zu Teilnehmerendgeräten, die keine Gespräche mit reduzierter Übertragungsrate unterstützen, von dem rufenden Teilnehmerendgerät aus eine Gesprächsverbindung mit reduzierter Bitrate möglich ist. Dazu wird in der Zielvermittlungsstelle, an die das gerufene Teilnehmerendgerät angeschlossen ist, eine Umsetzung und Anpassung der empfangenen Signale an Signale mit Standardübertragungsrate vorgenommen. Diese umgesetzten Signale werden auf dem verbleibenden Verbindungsstück zu dem gerufenen Teilnehmerendgerät übertragen. Das Vereinbaren der niedrigeren Übertragungsrate erfolgt in diesem Fall mit der Zielvermittlungsstelle anstelle des gerufenen Teilnehmerendgerätes.

## Patentansprüche

1. Verfahren zum Einrichten einer digitalen Nachrichtenverbindung zwischen einem rufenden und mindestens einem gerufenen Teilnehmerendgerät, mit den Schritten
- Anfordern einer Verbindung von dem rufenden zu dem gerufenen Teilnehmerendgerät bei einer Vermittlungsstelle und
- Einrichten der Verbindung mit einer Standardübertragungsrate, gekennzeichnet durch die Schritte:
- Auswählen eines neuen, niedrigeren Wertes für die Übertragungsrate,
- Vereinbaren des neuen, niedrigeren Wertes mit der Vermittlungsstelle,
- Umschalten der Übertragungsrate der Verbindung auf den neuen, niedrigeren Wert.

2. Verfahren nach Anspruch 1, bei dem der neue, niedrigere Wert für die Übertragungsrate aus einer Reihe vorgegebener Werte ausgewählt wird.

3. Verfahren nach Anspruch 1, bei dem der Wert der Standardübertragungsrate ein ganzzahliges Vielfaches des neuen, niedrigeren Wertes ist.

4. Verfahren nach Anspruch 1, bei dem in der Vermittlungsstelle Signale mehrerer Nachrichtenverbindungen mit niedrigerer Übertragungsrate zu einem Signal mit der Standardübertragungsrate gemultiplext werden.

5. Verfahren nach Anspruch 1, bei dem es sich bei der Nachrichtenverbindung um eine Sprachverbindung zur Übertragung digitaler Telefongespräche handelt.

6. Verfahren nach Anspruch 5, bei dem zu übertragende Sprache digitalisiert und komprimiert wird.

7. Verfahren nach Anspruch 2, bei dem eine Liste mit der Reihe der vorgegebenen Werte bei dem gerufenen Teilnehmerendgerät abgefragt wird.

8. Verfahren nach Anspruch 1, bei dem der neue, niedrigere Wert für die Übertragungsrate auch zwischen dem rufenden und dem gerufenen Teilnehmerendgerät vereinbart wird.

9. Verfahren nach Anspruch 1, bei dem die neue Übertragungsrate von dem gerufenen Teilnehmerendgerät automatisch erkannt wird.

10. Teilnehmerendgerät zum Einrichten einer digitalen Nachrichtenverbindung zu mindestens einem gerufenen Teilnehmerendgerät, mit folgenden Einrichtungen:
- Mittel zum Anfordern einer vorläufigen Verbindung mit einer Standardübertragungsrate zu dem gerufenen Teilnehmer bei einer Vermittlungsstelle,
- Mittel zum Auswählen eines neuen, niedrigeren Wertes für die Übertragungsrate und
- Mittel zum Vereinbaren des neuen, niedrigeren Wertes mit der Vermittlungsstelle.

11. Vermittlungsstelle zum Einrichten einer digitalen Nachrichtenverbindung zwischen mindestens zwei Teilnehmerendgeräten, mit folgenden Einrichtungen:
- Mittel zum Einrichten einer von einem rufenden Teilnehmerendgerät angeforderten vorläufigen Verbindung mit einer Standardübertragungsrate zu einem gerufenen Teilnehmerendgerät,
- Mittel zum Vereinbaren eines neuen, niedrigeren Wertes für die Übertragungsrate mit dem rufenden Teilnehmerendgerät,
- Mittel zum Umschalten der Übertragungsrate der vorläufigen Verbindung auf den neuen, niedrigeren Wert.

12. Vermittlungsstelle nach Anspruch 11 mit Mitteln zum Umwandeln der über die Verbindung zu dem rufenden Teilnehmerendgerätes empfangenen Signale mit niedrigerer Übertragungsrate in Signale mit Standardübertragungsrate.
